# EUROPEAN PATENT APPLICATION

(11) **EP 0 558 853 A2**
(43) Date of publication of application: **08.09.1993**
(21) Application number: 92310377.4
(22) Date of filing: 13.11.1992
(51) Int. Cl.: H04N 5/92

(54) **Recording medium and digital video-information recording/reproducing system**

(30) Priority: 04.03.1992 JP 47135/92
(71) Applicant: PIONEER VIDEO CORPORATION, Nakakoma-gun Yamanashi (JP); PIONEER ELECTRONIC CORPORATION, Meguro-ku Tokyo 153 (JP)
(72) Inventor: Itoh, Naoto, c/o Pioneer Video Corp., Nakakoma-gun, Yamanashi (JP); Nagai, Yoshihisa, c/o Pioneer Video Corp., Nakakoma-gun, Yamanashi (JP); Nomura, Satoru, c/o Pioneer Video Corp., Nakakoma-gun, Yamanashi (JP)
(74) Representative: Tomlinson, Kerry John

(57) **Abstract**

An information recording/reproducing system in which, at the time of information recording, an input digital video signal is divided into a plurality of frequency band components, and information portion data consisting of a predetermined number of subblock data (subblock 0, subblock 1, etc) with each piece of the digital video signal data per frequency band taken as one subblock data and head portion data (DL0, DL1 etc) including identification data blocks indicating frequency bands for the respective subblocks are recorded as one block on a recording medium. At the time of reproduction, individual pieces of identification data in a header portion are discriminated from the digital video signal, picked up from the recording medium, block by block, and the digital video signal of each subblock is selectively extracted in accordance with the identification data, and the bands of the extracted digital video signals are combined to thereby generate reproduced digital video signals.

## Description

The present invention relates to a recording medium on which a digital video signal is to be recorded, and a system for recording a digital video signal on this recording medium and reproducing the recorded video information possible.

In cases where video information is recorded on a recording medium such as a disk, in reproducing the video information, all the pieces of video signal data or recorded video information are normally reproduced to provide a video image having substantially the same image quality as the one at the time of recording the image. For instance, in playing a recording medium on which high-quality video information of the MUSE (Multiple Sub-Nyquist Sampling Encoding) system is recorded, the high-quality video information cannot be reproduced unless the recording medium is played by a machine which is specially designed for such a recording medium. When an operator wants to obtain high-quality video information at a low image quality, it is reproduced in the form of high-quality video information and is converted into a video image with the quality of, for example, an NTSC video image, by a separate down-converting machine.

The conventional conversion of the image quality is simply to convert the format of a video signal and cannot reproduce video information from a single recording medium with different image qualities and in the same video signal format.

It is therefore an object of the present invention to provide a recording medium which can allow video information to be reproduced with different image qualities in the same video signal format, and an information recording/reproducing system which can handle the same.

According to one aspect of the present invention, there is provided a recording medium on which a digital video signal is recorded in the form of blocks, each block comprising an information portion consisting of a plurality of subblocks, and a header portion including a plurality of identification data blocks located preceding the information portion and respectively associated with said subblocks, each identification data block indicating a frequency band of the recorded digital video signal in the associated one of the subblocks.

On the recording medium embodying the present invention, a plurality of subblocks in each of which a digital video signal is to be recorded are formed in each block, and identification data indicating the frequency bands of the digital video signals of the respective subblocks are respectively recorded in a plurality of identification data blocks, which are located preceding the subblocks in one block and respectively associated with the subblocks.

According to another aspect of the present invention, there is provided an information recording system for recording a digital video signal on a recording medium, comprising means for dividing an input digital video signal into a plurality of frequency band components and generating a group of band digital video signal data; means for producing information portion data consisting of a predetermined number of subblock data with each piece of the band digital video signal data per frequency band taken as one subblock data; means for producing header portion data including identification data blocks indicating frequency bands respectively associated with the subblocks; and means for recording the information portion data and the header portion data as one block on said recording medium.

In the information recording system embodying the present invention, an input digital video signal is divided into a plurality of frequency band components to be a group of band digital video signal data, information portion data consisting of a predetermined number of subblock data with each piece of the band digital video signal data per frequency band taken as one subblock data and header portion data including identification data blocks indicating frequency bands for the respective subblocks are produced, and the information portion data and the header portion data are recorded as one block on the recording medium.

According to a further aspect of the present invention, there is provided an information reproducing system for a recording medium on which a digital video signal has been recorded in the form of blocks, each block comprising an information portion consisting of a plurality of subblocks, and a header portion including a plurality of identification data blocks located preceding the information portion and respectively associated with the subblocks, each identification data block indicating the frequency band of the recorded digital video signal in the associated one of the subblocks, the system comprising reading means for reading the digital video signal from the recording medium; identifying and selecting means for acquiring, block by block, identification data in the header portion from the digital video signal output from the reading means and selectively relaying the digital video signals of the subblocks in accordance with the identification data; and means for, every time digital video signals for a predetermined number of subblocks are relayed from the identifying and selecting means, performing band combination of the relayed digital video signals to thereby generate reproduced digital video signals.

In the information reproducing system embodying the present invention, individual pieces of identification data in the header portion are discriminated from the digital video signal, read out from a recording medium by the reading means and output therefrom, block by block, and the digital video signal of each subblock is selectively relayed from the identifying and selecting means in accordance with the identification data, and, every time digital video signals for a predetermined number of subblocks are relayed from the identifying and selecting means, the bands of the relayed digital video signals are combined to thereby generate reproduced digital video signals.

According to a yet further aspect of the present invention, there is provided an information recording/reproducing system for recording a digital video signal on a recording medium and reproducing the digital video signal therefrom, comprising: means for dividing an input digital video signal into a plurality of frequency band components and generating a group of band digital video signal data; means for producing information portion data consisting of a predetermined number of subblock data with each piece of said band digital video signal data per frequency band taken as one subblock data; means for producing header portion data including identification data blocks indicating the frequency bands respectively associated with said subblocks; means for recording said information portion data and said header portion data as one block on said recording medium; reading means for reading said digital video signal from said recording medium; identifying and selecting means for acquiring, block by block, identification data in said header portion from said digital video signal output from said reading means and selectively relaying said digital video signals of said subblocks in accordance with said identification data; and means for, every time digital video signals for a predetermined number of subblocks are relayed from said identifying and selecting means, performing band combination of said relayed video digital signals to thereby generate reproduced digital video signals.

A preferred embodiment of the present invention will now be described by way of example only and with reference to the accompanying drawings, in which:
Fig. 1 is a diagram illustrating the physical format of one block of a recording medium according to the present invention;
Fig. 2 is a diagram exemplifying the arrangement of subblocks of an audio signal and a video signal on the recording medium embodying the present invention;
Fig. 3 is a block diagram illustrating the structure of an information recording system according to the present invention;
Fig. 4 is a diagram showing effective pixels in one frame;
Fig. 5 is a diagram showing the states before and after DCT transform;
Fig. 6 is a diagram illustrating the results of DCT transform in a two-dimensional frequency plane;
Fig. 7 is a block diagram illustrating the structure of an information reproducing system according to the present invention; and
Fig. 8 is a diagram illustrating frame data before DCT transform in a two-dimensional frequency plane.

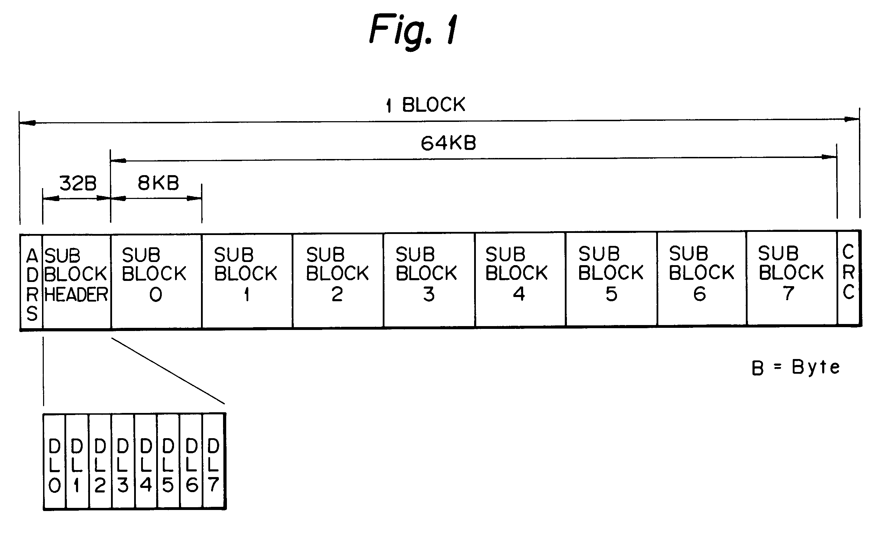

Fig. 1 illustrates the structure of one block of a recording medium embodying the present invention. One block consists of an address (ADRS), a subblock header (SUBBLOCK HEADER), eight subblocks (SUBBLOCK) 0 to 7 and an error detection code (CRC: Cyclic Redundancy Check). The address, the foremost element of one block, indicates the position of that block on a track. The subblock header following the address consists of 32 bytes and indicates the types of information signals of the subblocks. The subblock header is therefore divided into eight areas where device labels (DL0 to DL7) as identification data indicating the types of the information signals of the associated subblocks are to be respectively described. The eight subblocks 0 to 7 follow the subblock header in order. The error detection code is located at the end of the block.

On the recording medium, blocks each having such a structure are repeatedly located in the order of their addresses along the track, with a sync signal (not shown in Fig. 1) inserted between consecutive blocks.

Given that the capacity of one subblock is 8 Kbytes, the total capacity of the eight subblocks 0 to 7 becomes 64 Kbytes, as shown in Fig. 1, and the capacity of the subblock header is 32 bytes.

Each of the eight device labels (DL0 to DL7) defines a maximum of 256 types of devices with values of 00H to FFH (H indicates a hexadecimal notation). 00H to FFH may be previously determined as follows.
00H: NULL
01H: SYSTEM 02H-0FH: RESERVED
10H-13H: VIDEO CH1-CH4 14H-1FH: RESERVED
20H-23H: AUDIO CH1-CH4 24H-FFH: RESERVED
NULL represents that the device has no significant meaning and is used when a dummy is necessary in video signal data and audio signal data; the system need not read data from the associated subblock, thus ensuring an efficient operation. SYSTEM stores a control program or the like which is used by the system. VIDEO is video signal data, and AUDIO audio signal data. CH1 to CH4 indicate channel numbers, and RESERVED indicates that the associated subblock is reserved for an information signal which will be set in the future. If the device label DL0 is set as DL0: DEVICE LABEL = 10H, the information signal in the subblock 0 is video signal data of the first channel. With DL1: DEVICE LABEL = 21H, the information signal in the subblock 1 is audio signal data of the second channel.

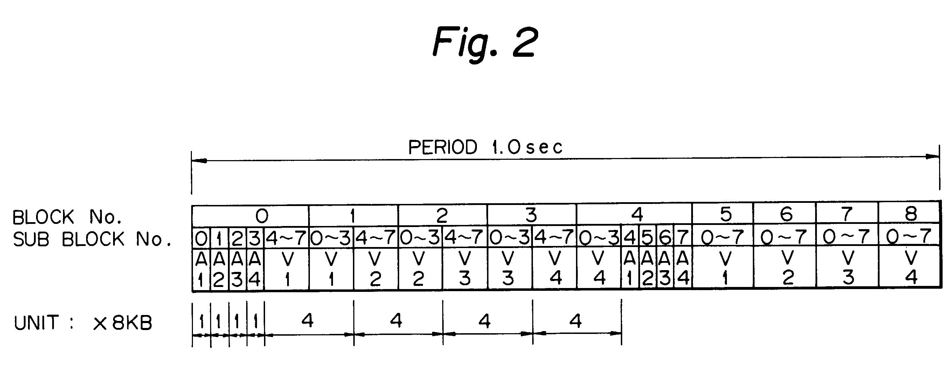

When an optical disk which can be played at the transfer rate of 4.7 Mbps is used as a recording medium, the digital reproduced signal is output at the rate of nine blocks per sec or 72 subblocks per sec. If 4-channel audio signal data and 4-channel video signal data are allocated on the optical disk, the subblocks would be arranged as shown in Fig. 2. This arrangement is the format in which audio signal data for four channels are assigned to a half of one block with one subblock provided per channel, and video signal data for four channels are assigned to the subsequent 32 subblocks in that block with eight subblocks per channel. In this case, a group of information signals including audio signal data and video signal data both for four channels are repeated in a cycle of 36 subblocks. It is to be noted that the video signal data for four channels is one video image divided into four as will be described later, not four video images assigned as video signal data to the individual channels. The audio signal data for four channels are sounds of independent channels, respectively.

A description will now be given of an information recording system which records audio signal data and video signal data in such a format on a disk.

In the information recording system, 1-channel input digital video signal data is supplied to a video compressing/coding section 1. The video compressing/coding section 1 comprises a sub-sampling circuit 2, an MC+DPCM (DPCM between movement compensation frames) circuit 3, an inter-frame DCT (Discrete Cosine Transform) circuit 4, a selector 5, quantizers 6A to 6D and Huffman coders 7A to 7D. The sub-sampling circuit 2 thins out the input video signal data at a sub-sampling frequency which is, for example, a half the sampling frequency, and outputs the resultant data. The video signal data from the sub-sampling circuit 2 is supplied via the MC+DPCM circuit 3 to the DCT circuit 4. The DCT circuit 4 divides the video signal data into blocks of 8 × 8 pixels, and performs two-dimensional DCT transform for each block. The output of the DCT circuit 4 is connected to the selector 5, which divides the result of the DCT transform into four and distributes the resultant data. The distribution outputs of the selector 5 are connected to the quantizers 6A-6D to which the Huffman coders 7A to 7D are also connected. The video coded data output from the Huffman coders 7A to 7D are held in buffers 8A to 8D, respectively.

Meantime, the digital audio signal data for four channels are respectively supplied to subband coding sections 11A to 11D. The subband coding section 11A comprises a subband dividing filter 41, a quantizer 42, an FFT analyzer 43 and a multiplexer 44. The subband dividing filter 41 divides the digital audio signal data into a plurality of bands, for example, 32 bands, and outputs the resultant data to the quantizer 42 in the order of a lower frequency band. The FFT analyzer 43 prepares coding data from the audio signal data to determine the number of quantizing bits of each band in the quantizer 42. The quantized data output from the quantizer 42 is supplied together with the coding data to the multiplexer 44 where they are formed into audio coded data in a predetermined format. The subband coding sections 11B to 11D are designed in the same manner as the subband coding section 11A. The audio coded data output from the subband coding sections 11A to 11D are held in buffers 12A to 12D, respectively.

The outputs of the buffers 8A to 8D and 12A to 12D are connected to a selector 13 to which an address subblock header data generator 14 is connected. The selector 13 combines the individual pieces of data held in the buffers 8A to 8D and 12A to 12D with the address subblock header data from the address subblock header data generator 14 to prepare subblocked data, and supplies the subblock data to a correction code adding circuit 15. The output of the correction code adding circuit 15 is connected to a modulator 16 whose output signal is supplied via a driver 17 to a recording head 18. A disk 19 on which the video signal data and audio signal data are to be recorded is rotated by a well-known disk driving system (not shown).

In the thus constituted information recording system, digital video signal data in use is YC_{R}C_{B} data which is acquired by converting three-color data, RGB (red, green, blue), into a luminance signal component Y and two color difference signal components C_{R} and C_{B}. This is a format standardized in Rec. 601 of CCIR (International Radio Consultative Committee). As individual pieces of YUV data are compressed and coded in the aforementioned manner by the above structure, a description will be given only on the luminance signal component Y.

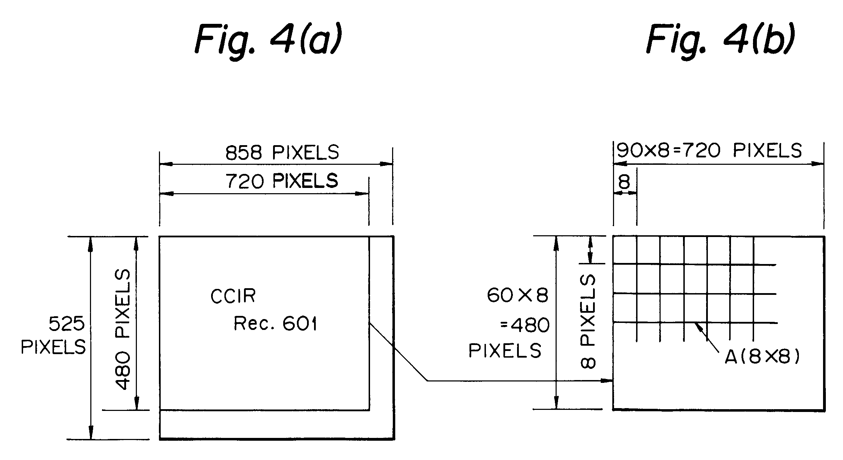

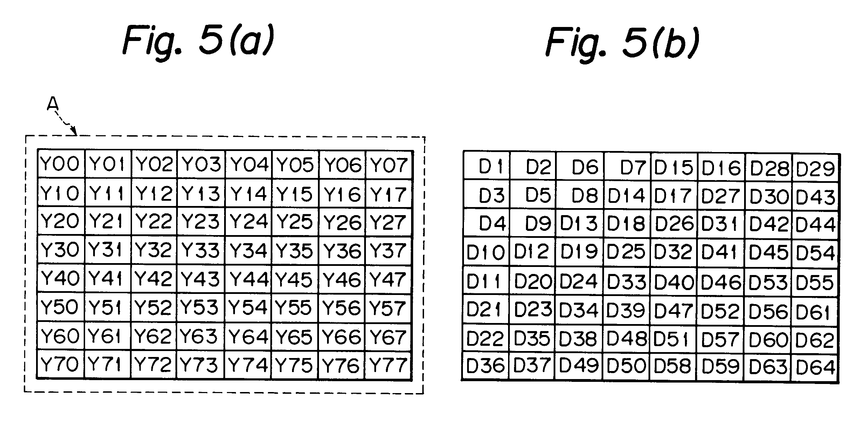

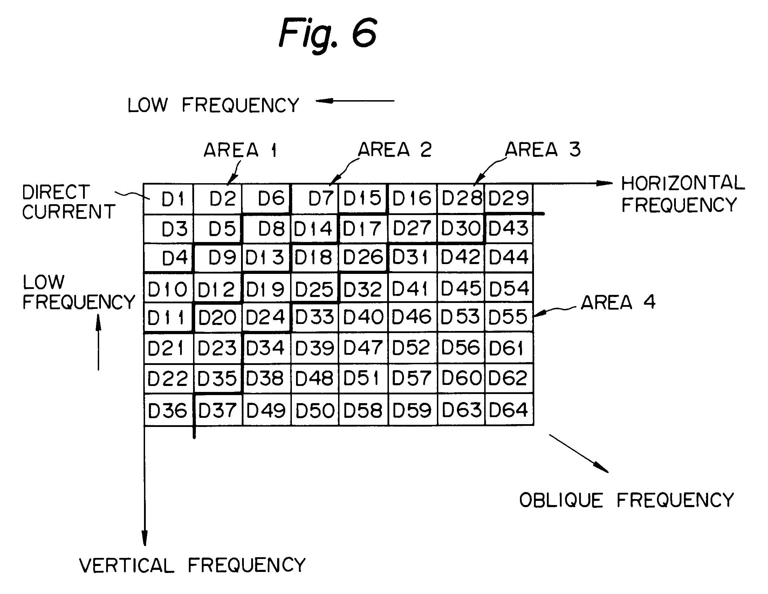

The number of pixels in one frame of the luminance signal component Y after sub-sampling is 858 (horizontal direction) × 525 (vertical direction) as shown in Fig. 4(a). The number of effective pixels in the total pixels is 720 × 480. The 720 × 480 pixels are coded in the movement compensation predicting system in the MC+DPCM circuit 3, and then divided by the DCT circuit 4 into blocks each consisting of 8 × 8 pixels, as shown in Fig. 4(b). One frame contains 90 × 60 = 5400 divided blocks. The DCT transform is carried out for each block consisting of 8 × 8 pixels. Provided that the block A in Fig. 4(b) has pixel data Yij (i = 0, 1, ... 7, j = 0, 1, ... 7) of the luminance signal component as shown in Fig. 5(a), the DCT transform of the one block yields DCT transformed data Dk (k = 1, 2, ... 64) as shown in Fig. 5(b). The closer the position of the DCT transformed data Dk to the upper left, then that DCT transformed data Dk represents a lower frequency component. The result of the DCT transform can be viewed as a two-dimensional frequency plane as shown in Fig. 6. The smaller the value of k in the DCT transformed data Dk is, the lower the frequency of that data becomes. The selector 5 thus divides the DCT transformed data Dk into four areas 1 to 4 with different frequency bands and distributes the data accordingly. For instance, D1 to D6 are allocated in the area 1, D7 to D15 in the area 2, D16 to D36 in the area 3 and D37 to D64 in the area 4, as indicated by the thick solid lines in Fig. 6. The data in the area 1 is supplied to the quantizer 6A, the data in the area 2 to the quantizer 6B, the data in the area 3 to the quantizer 6C, and the data in the area 4 to the quantizer 6D. The quantizers 6A to 6D linearly quantize the respective pieces of data in the assigned step sizes using quantizing tables. The quantized pieces of data are transformed into Huffman codes in the Huffman coders 7A to 7D before they are held in the buffers 8A to 8d.

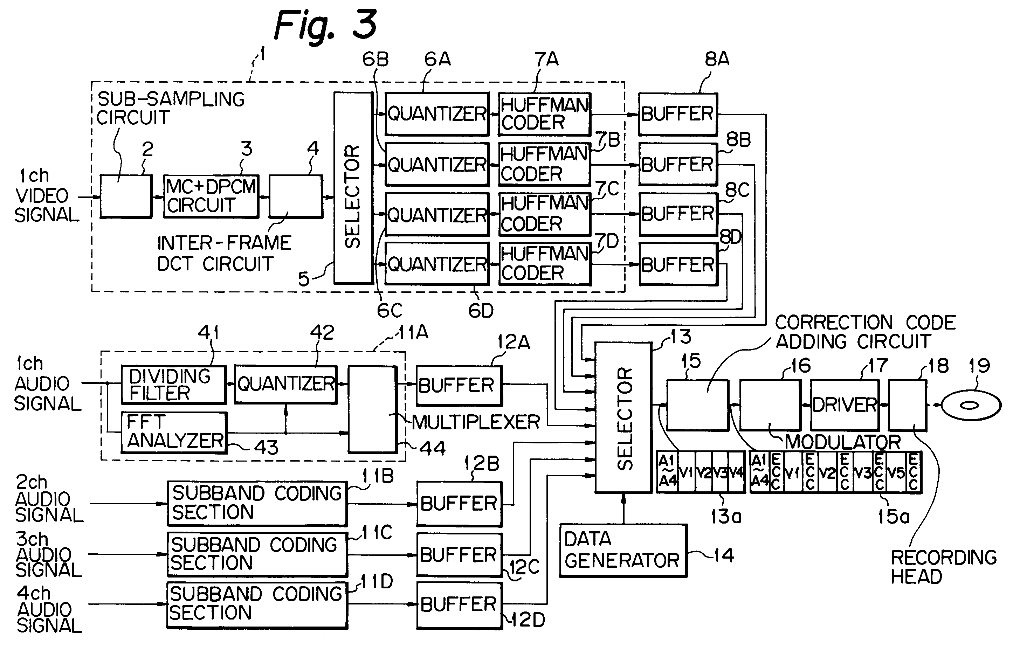

The 4-channel audio signal data is also coded and held in the respective buffers 12A to 12D. To divide the data held in the buffers 8A to 8D and 12A to 12D, therefore, the selector 13 outputs the address data from the address subblock header data generator 14 first, and then outputs the subblock header data. The subblock header data, which serves to determine device labels (DL0-DL7), is set previously. After outputting the subblock header data, the selector 13 outputs the audio signal data of the first channel from the buffer 12A as subblock data A1, the audio signal data of the second channel from the buffer 12B as subblock data A2, the audio signal data of the third channel from the buffer 12C as subblock data A3, and the audio signal data of the fourth channel from the buffer 12D as subblock data A4, in order. Further, the selector 13 sequentially outputs the video signal data of the area 1 from the buffer 8A as subblock data V1, the video signal data of the area 2 from the buffer 8B as subblock data V2, the video signal data of the area 3 from the buffer 8C as subblock data V3, and the video signal data of the area 4 from the buffer 8D as subblock data V4. In other words, the selector 13 outputs the subblock data as indicated by "13a" in Fig. 3. It should be noted that one subblock data is not limited to one subblock, but may span over a plurality of subblocks. The subblocked data signals for each block are supplied to the correction code adding circuit 15 where an error correction code ECC is added for each subblock data as shown by "15a" in Fig. 3. The output signal of the correction code adding circuit 15 is modulated by a modulation system, such as EFM modulation, by the modulator 16. The output signal of the modulator 16 is supplied via the driver 17 to the recording head 18 to be written on the disk 19. If the recording head 18 is of an optical type that uses a semiconductor laser, the video and audio information are recorded on the disk 19 by the irradiated laser beam.

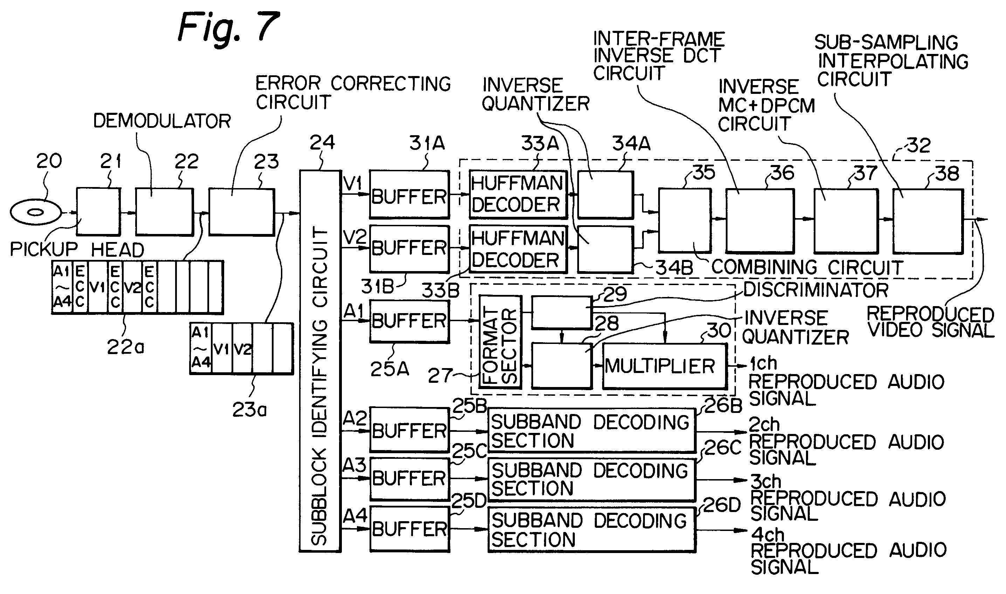

Fig. 7 illustrates a system for reproducing information from a disk on which digital video signal data and audio signal data are recorded. This information reproducing system does not reproduce all the recorded video signal data, but reproduces only the video signal data in the areas 1 and 2. The arrangement of the reproducing system will be described below. A disk 20 is driven by a driving system (not shown), and a pickup head 21 optically picks up the recorded contents from the disk 20. The picked-up RF signal output from the pickup head 21 is supplied to a demodulator 22 where it is demodulated into a digital signal block by block by a demodulating system, such as EFM demodulation. In other words, the demodulator 22 outputs the individual pieces of data in the order of subblocks indicated by "22a" in Fig. 7. The demodulator 22 is connected via an error correcting circuit 23 to a subblock identifying circuit 24.

The error correcting circuit 23 performs error correction only on subblock data V1 and V2 of the video signal data as indicated by "23a" in Fig. 7, and will not output subblock data V3 and V4, disregarding them. The subblock identifying circuit 24 identifies the contents of the individual device labels (DL0-DL7) in the subblock header for each block using, for example, a table and distributes the subblocks at the timing according to the sync signal. The subblock identifying circuit 24 is provided with distribution output terminals, which include audio outputs A1 to A4, and video outputs V1 and V2. When the subblock identifying circuit 24 identifies the digital signal from the error correcting circuit 23 and when the content of the identified device label is DL0: DEVICE LABEL = 20H, the digital signal in the subblock 0 is supplied as a digital audio signal of the first channel from the audio output A1. When the content of the identified device label is DL1: DEVICE LABEL = 21H, the digital signal in the subblock 0 is supplied as a digital audio signal of the second channel from the audio output A2. The same is applied to the subblocks 2 and 3. When the content of the identified device label is DL4: DEVICE LABEL = 10H, the digital signal in the subblock 4 is output as a digital video signal of the first channel (area 1) from the video output V1. With DL5: DEVICE LABEL = 11H, the digital signal in the subblock 5 is output as a digital video signal of the second channel (area 2) from the video output V2.

Some modification may be made so that the error correcting circuit 23 performs error correction on all the subblock data V1 to V4 of the video signal data while the subblock identifying circuit 24 outputs only the subblock data V1 and V2 of the video signal data after the error correction in accordance with the content of the identified device label.

The audio outputs A1 to A4 are connected via buffers 25A to 25D to subband decoding sections 26A to 26D, respectively. The subband decoding section 26A comprises a format selector 27, an inverse quantizer 28, a decode data discriminator 29 and a multiplier 30. The format selector 27 selects the audio signal component data and the decode data from the digital audio signal data held in the buffer 25A and outputs those data. The selected decode data is supplied to the decode data discriminator 29, which discriminates the number of quantizing bits at the time of the data coding and to which subband the data belongs, on the basis of the decode data. The inverse quantizer 28 performs inverse quantization of the audio signal component data in accordance with the output signal of the decode data discriminator 29 for each subband to decode the original amplitude level to data and sends the resultant data to the multiplier 30. The multiplier 30 combines the decoded data of the individual subbands to transform it into a full-band audio decoded data in accordance with the output signal of the decode data discriminator 29. The subband decoding sections 26B to 26D are designed in the same way as the subband decoding section 26A. The audio decoded data output from each of the subband decoding sections 26A to 26D is a digital audio reproduced signal.

The video outputs V1 and V2 are connected via buffers 31A and 31B to a video expanding/decoding section 32. The video expanding/decoding section 32 comprises Huffman decoders 33A and 33B, inverse quantizers 34A and 34B, a combining circuit 35, an inter-frame inverse DCT circuit 36, an inverse MC+DPCM circuit 37 and a sub-sampling interpolating circuit 38. The video expanding/decoding section 32 performs an operation reverse to that of the aforementioned compressing/coding section 1.

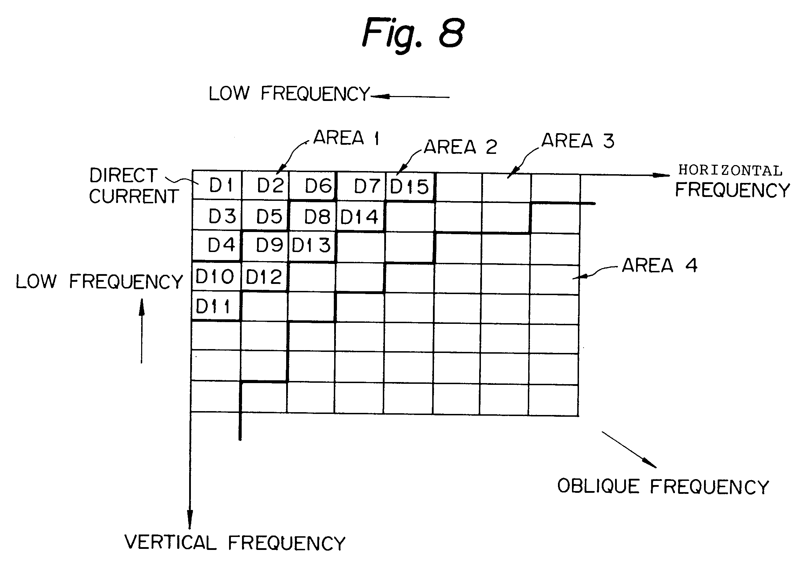

The digital video signal data output from the video output V1 is held in the buffer 31A. The digital video signal data is supplied to the inverse quantizer 34A after being decoded by the Huffman decoder 33A. The inverse quantizer 34A performs inverse quantization of the decoded video signal data using a quantizing table. The digital video signal data output from the video output V2 is likewise processed by the Huffman decoder 33B and the inverse quantizer 34B. The individual pieces of inverse-quantized video signal data are arranged in the order of areas 1 and 2 in the combining circuit 35 to become block-by-block data. The data for one frame, when expressed in a two-dimensional frequency plane, becomes as shown in Fig. 8; only the areas 1 and 2 contain data while the areas 3 and 4 contain no data so that data becomes all zero. The output signal of the combining circuit 35 is subjected to inverse DCT transform in the inter-frame inverse DCT circuit 36 for each block consisting of 8 × 8 pixels. The resultant signal is then supplied to the inverse MC+DPCM circuit 37. The inverse MC+DPCM circuit 37 decodes the data undergone the inverse DCT transform, in the movement compensation predicting system, yielding video signal data consisting of 720 × 480 pixels. This video signal data is interpolated by the sub-sampling interpolating circuit 38, and the resultant signal is output as a reproduced digital video signal.

Although the video signal data of only the areas 1 and 2 are reproduced in the above-described embodiment, the present invention is not restricted to the particular type. For example, if the video signal data are written in the all the areas 1 to 4, the video signal data of all the areas 1 to 4 may of course be reproduced, or if the video signal data are written in the areas 1 to 3, the video signal data of the areas 1 to 3 may be reproduced. A switch may be provided to select from which one of the areas 1-4 data should be reproduced, so that data of the selected area alone can be reproduced according to the selection.

Further, the arrangement for separating the digital video signal into a plurality of frequency bands is not limited to the one described above. For instance, a plurality of BPFs may be used to divide the digital video signal.

Further, although the recording medium has been described as a disk in the foregoing description, it is in no way limited to this particular type, but the present invention may be adapted for other types of recording media such as a tape and a card.

In short, according to the present invention, at the time information is recorded on a recording medium, an input digital video signal is divided into a plurality of frequency band components to be a group of band digital video signal data, information portion data consisting of a predetermined number of subblock data with each piece of the band digital video signal data per frequency band taken as one subblock data and header portion data including identification data blocks indicating frequency bands for the respective subblocks are produced, and the information portion data and the header portion data are recorded as one block on the recording medium. At the time information is reproduced from the recording medium, individual pieces of identification data in the header portion are discriminated from the digital video signal, read out from the recording medium, block by block, and the digital video signal of each subblock is extracted in accordance with the identification data, and, every time digital video signals for a predetermined number of subblocks are extracted, the bands of the extracted digital video signals are combined to thereby generate reproduced digital video signals.

At the reproduction time, therefore, video information can be reproduced from the same recording medium with the image quality determined by the specification of the reproducing system or an arbitrary image quality and in the same video signal format. If the reproducing system is used to see pictures, for example, a high-image quality specification to reproduce the full band of the recorded digital video signal should be used. With the reproducing system used for news reports, a low-image quality specification to reproduce a partial band of the recorded digital video signal may be used. In this manner, the reproducing system can be selected according to the purpose of the usage. The present invention is therefore advantageous in permitting a user to select a low-cost reproducing system with a low-image quality specification rather than an expensive reproducing system with a high-image quality specification when the latter is not particularly needed.

## Claims

1. A recording medium on which a digital video signal is recorded in the form of blocks, each block comprising an information portion consisting of a plurality of subblocks, and a header portion including a plurality of identification data blocks located preceding said information portion and respectively associated with said subblocks, each identification data block indicating the frequency band of said recorded digital video signal in the associated one of said subblocks.

2. An information recording system for recording a digital video signal on a recording medium (19), comprising:
means (1) for dividing an input digital video signal into a plurality of frequency band components and generating a group of band digital video signal data;
means (13) for producing information portion data consisting of a predetermined number of subblock data with each piece of said band digital video signal data per frequency band taken as one subblock data;
means (14) for producing header portion data including identification data blocks indicating the frequency bands respectively associated with said subblocks; and
means (18) for recording said information portion data and said header portion data as one block on said recording medium (19).

3. An information reproducing system for a recording medium (20) on which a digital video signal has been recorded in the form of blocks, each block comprising an information portion consisting of a plurality of subblocks, and a header portion including a plurality of identification data blocks located preceding the information portion and respectively associated with the subblocks, each identification data block indicating the frequency band of the recorded digital video signal in the associated one of the subblocks, the system comprising:
reading means (21) for reading said digital video signal from said recording medium;
identifying and selecting means (24) for acquiring, block by block, identification data in said header portion from said digital video signal output from said reading means (21) and selectively relaying said digital video signals of said subblocks in accordance with said identification data; and
means (22) for, every time digital video signals for a predetermined number of subblocks are relayed from said identifying and selecting means, performing band combination of said relayed digital video signals to thereby generate reproduced digital video signals.

4. An information recording/reproducing system for recording a digital video signal on a recording medium (19,20) and reproducing the digital video signal therefrom, comprising:
means (1) for dividing an input digital video signal into a plurality of frequency band components and generating a group of band digital video signal data;
means (13) for producing information portion data consisting of a predetermined number of subblock data with each piece of said band digital video signal data per frequency band taken as one subblock data;
means (14) for producing header portion data including identification data blocks indicating the frequency bands respectively associated with said subblocks;
means (18) for recording said information portion data and said header portion data as one block on said recording medium;
reading means (21) for reading said digital video signal from said recording medium;
identifying and selecting means (24) for acquiring, block by block, identification data in said header portion from said digital video signal output from said reading means and selectively relaying said digital video signals of said subblocks in accordance with said identification data; and
means (32) for, every time digital video signals for a predetermined number of subblocks are relayed from said identifying and selecting means, performing band combination of said relayed digital video signals to thereby generate reproduced digital video signals.

5. A recording system as claimed in claim 2, wherein the means (1) for dividing the input digital video signal into a plurality of frequency band components comprises:
means (4) to convert the input digital video signal data into a plurality of blocks, each block comprising a plurality of pixels, and to transform the data in each block, whereby pixels of transformed data having similar frequencies are located in proximity to one another in the transformed block;
and
means (5) to divide the transformed block into regions with different frequencies such that the input digital video signal is divided in a plurality of frequency band components.

6. A reproducing system as claimed in claim 3, wherein said means (32) for performing band combination of said relayed digital video signals comprises:
means to combine the relayed digital video signals to form blocks of data comprising a plurality of pixels, in which pixels of data having similar frequencies are located in proximity to one another in a block; and
means (36) to transform the data in each block to generate reproduced digital video signals.

7. A recording/reproducing system as claimed in claim 4, wherein the means (1) for dividing the input digital video signal into a plurality of frequency band components comprises:
means (4) to convert the input digital video signal data into a plurality of blocks, each block comprising a plurality of pixels, and to transform the data in each block, whereby pixels of transformed data having similar frequencies are located in proximity to one another in the transformed block;
and
means (5) to divide the transformed block into regions with different frequencies such that the input digital video signal is divided in a plurality of frequency band components; and
said means (32) for performing band combination of said relayed digital video signals comprises:
means to combine the relayed digital video signals to form blocks of data comprising a plurality of pixels, in which pixels of data having similar frequencies are located in proximity to one another in a block; and
means (36) to transform the data in each block to generate reproduced digital video signals.
